# EUROPÄISCHE PATENTSCHRIFT

(11) **EP 2 880 240 B1**
(45) Veröffentlichungstag und Bekanntmachung des Hinweises auf die Patenterteilung: **04.03.2020**
(21) Anmeldenummer: 14707744.0
(22) Anmeldetag: 03.03.2014
(51) Int. Cl.: E21B 3/02

(54) **ANTRIEBSVORRICHTUNG ZUM ANTRIEB VON BOHRGESTÄNGE UND VERFAHREN ZUM BETRIEB EINER SOLCHEN ANTRIEBSVORRICHTUNG**
DRILL PIPE TOP DRIVE AND METHOD FOR OPERATING THE SAME
DISPOSITIF D'ENTRAÎNEMENT DESTINÉ À ENTRAÎNER UN TRAIN DE TIGES ET PROCÉDÉ PERMETTANT DE FAIRE FONCTIONNER UN TEL DISPOSITIF D'ENTRAÎNEMENT

(30) Priorität: 05.03.2013 DE 102013203756
(43) Veröffentlichungstag der Anmeldung: 10.06.2015
(73) Patentinhaber: Bentec GmbH Drilling & Oilfield Systems, 48455 Bad Bentheim (DE)
(72) Erfinder: MOSS, Johannes, 48531 Nordhorn (DE)
(74) Vertreter: Werner & ten Brink
(86) Internationale Anmeldenummer: PCT/EP2014/054020
(87) Internationale Veröffentlichungsnummer: WO 2014/135475

(56) Entgegenhaltungen:
- US-B2- 7 320 374
- Thomas Kipker ET AL: "Drilling Rigs in Arctic Deep Temperature Environments - Design an Operation Challenges", , 9. Februar 2011 (2011-02-09), XP055150710, Gefunden im Internet: URL:https://www.onepetro.org/conference-pa per/OTC-22093-MS?sort=&start=0&q=otc+22093 &from_year=&peer_reviewed=&published_betwe en=&fromSearchResults=true&to_year=&rows=1 0# [gefunden am 2014-11-04]
- J R Neason ET AL: "OTC 19359 Specialized AC Drilling Rig for Arctic Offshore Drilling Applications", Offshore Technology Conference, 8. Mai 2008 (2008-05-08), Seiten 5-8, XP055150704, Gefunden im Internet: URL:https://www.onepetro.org/conference-pa per/OTC-19359-MS?sort=&start=0&q=OTC+19359 &from_year=&peer_reviewed=&published_betwe en=&fromSearchResults=true&to_year=&rows=1 0# [gefunden am 2014-11-04]
- Hege Kverneland ET AL: "Electrically powered drilling equipment used in arctic and harsh environment", , 6. Oktober 2006 (2006-10-06), XP055150714, Gefunden im Internet: URL:https://www.onepetro.org/conference-pa per/SPE-101884-MS?sort=&start=0&q=spe+1018 84&from_year=&peer_reviewed=&published_bet ween=&fromSearchResults=true&to_year=&rows =10# [gefunden am 2014-11-04]

## Beschreibung

Die Erfindung betrifft eine im Folgenden gemäß der üblichen Fachterminologie auch nur kurz als Topdrive bezeichnete Antriebsvorrichtung zum Antrieb von Bohrgestänge beim Niederbringen von Bohrungen auf Kohlenwasserstoff-Lagerstätten, also z. B Erdöl oder Erdgas, oder zur Nutzung von Geothermie.

Derartige Topdrives sind an sich bekannt und umfassen ein Getriebe, mittels dem das Drehmoment eines ebenfalls von dem Topdrive umfassten Antriebsmotors auf das Bohrgestänge übertragen wird.

Für das Getriebe des Topdrives ist bekannt, dass dieses unter Last nur oberhalb einer insbesondere auch durch die Art des Getriebeöls bestimmten Minimaltemperatur betrieben werden darf. Diese Minimaltemperatur liegt zum Beispiel bei minus 20 °C. Bei Temperaturen unterhalb dieser Minimaltemperatur ist das Getriebe zunächst ohne Last bis auf eine vorgegebene minimale Betriebstemperatur warmzufahren. Diese minimale Betriebstemperatur liegt zum Beispiel bei minus 15 °C. Für ein derartiges Warmfahren des Getriebes ist eine Kaltstartprozedur vorgesehen.

Die bisher angewandte Kaltstartprozedur setzt voraus, dass eine stabile Netzspannung von 600/690 V am Hauptmotor (Antriebsmotor) und an einem den Hauptmotor speisenden Frequenzumrichter zur Verfügung steht.

Eine derartige und vor allem stabile Netzspannung steht an den Orten, an denen Bohranlagen und mit diesen der davon umfasste Topdrive betrieben werden, nicht immer zur Verfügung. Günstiger wäre demnach, wenn die oben skizzierte Kaltstartprozedur mittels einer von einem Notstromaggregat erhältlichen Spannung von zum Beispiel 442 V möglich wäre. Solche Notstromaggregate stehen am Aufstellungsort einer Bohranlage gerade wegen der oben skizzierten Problematik nicht immer stabiler Netzspannungen üblicherweise zur Verfügung und gemäß dem üblichen Einsatzfall solcher Notstromaggregate sind diese normalerweise auch dann betriebsbereit, wenn eine stabile Netzspannung nicht zur Verfügung steht.

Aufgrund latenter Explosionsgefahren beim Bohrbetrieb und der insofern zu beachtenden sogenannten ATEX-Direktiven kommt eine elektrisch betriebene und entweder aus dem Netz oder von einem Notstromaggregat gespeiste elektrische Heizung zur Gewährleistung der minimalen Betriebstemperatur des Getriebeöls eher nicht in Betracht. Zumindest wäre dafür eine zusätzliche Füllstandsüberwachung des Getriebeöls vorzusehen, damit eine solche grundsätzlich mögliche elektrische Heizung nicht in Betrieb gesetzt wird oder in Betrieb bleibt, wenn das elektrisch erwärmte Heizelement, also zum Beispiel im einfachsten Fall ein Widerstandsdraht, trockenfällt und dementsprechend keine Wärmeübertragung an das Getriebeöl stattfindet und stattdessen ein Durchbrennen des Heizelements droht. Unabhängig davon erfordert eine mögliche elektrisch betriebene Heizung mit der erforderlichen Heizleistung einen erheblichen Platzbedarf. Dieser Platz steht in dem im Bohrmast beim Bohrbetrieb alternierend aufwärts und abwärts bewegten Topdrive nicht zur Verfügung oder wird üblicherweise von anderen Aggregaten belegt.

Eine Aufgabe der Erfindung besteht dementsprechend darin, eine Antriebsvorrichtung der eingangs genannten Art, also einen Topdrive, vorzuschlagen, bei dem die Erwärmung des Getriebeöls auf andere Art möglich ist. Eine weitere Aufgabe der Erfindung besteht darin, ein Verfahren zum Betrieb eines derartigen Topdrives anzugeben.

Diese Aufgabe wird erfindungsgemäß mit den Merkmalen der unabhängigen Ansprüche gelöst.

In Bezug auf den Topdrive, also eine Antriebsvorrichtung zum Antrieb von Bohrgestänge beim Niederbringen von Bohrungen auf Kohlenwasserstoff-Lagerstätten in Form eines Topdrives, ist dafür Folgendes vorgesehen:
Der Topdrive umfasst in an sich bekannter Art ein Hydraulikaggregat mit einer Wanne für Hydraulikflüssigkeit, insbesondere Hydrauliköl, in der sich bei einem betriebsbereiten oder in Betrieb befindlichen Topdrive Hydraulikflüssigkeit befindet. Der Topdrive umfasst des Weiteren in ebenfalls an sich bekannter Art ein Getriebe mit einer Getriebeölwanne, in der sich bei einem betriebsbereiten oder in Betrieb befindlichen Topdrive Getriebeöl befindet. Mittels eines zur spezifischen Bezugnahme als Getriebeöltemperatursensor bezeichneten Temperatursensors ist ein Getriebeöltemperaturmesswert für eine Temperatur des Getriebeöls in der Getriebeölwanne messbar.

Mittels des Hydraulikaggregats ist die Hydraulikflüssigkeit in Abhängigkeit von dem Getriebeöltemperaturmesswert über ein von dem Topdrive umfasstes Druckbegrenzungsventil umwälzbar.
Wenn also der Getriebeöltemperaturmesswert unter einem vorgegebenen oder vorgebbaren Grenzwert liegt, ist daran automatisch, also durch eine entsprechende Verarbeitung und logische Verknüpfung des Getriebeöltemperaturmesswerts und des Grenzwerts mittels einer dafür vorgesehenen Schaltung oder Software, erkennbar, dass vor Inbetriebsetzung des Topdrives eine Kaltstartprozedur ausgelöst werden muss. Die bei einer Erkennung einer solchen Situation ebenso automatisch, also in Abhängigkeit von dem Getriebeöltemperaturmesswert, auslösbare Kaltstartprozedur besteht darin, dass mittels des Hydraulikaggregats die Hydraulikflüssigkeit über das Druckbegrenzungsventil umgewälzt wird. Die beim Durchströmen des Druckbegrenzungsventils generierte Verlustleistung führt zu einer Erwärmung der Hydraulikflüssigkeit. Die so erwärmte Hydraulikflüssigkeit ist mittels des Hydraulikaggregats temperatur- und/oder zeitabhängig durch einen in der Getriebeölwanne platzierten Wärmetauscher leitbar.

Im Ergebnis wird damit die mit der Hydraulikflüssigkeit am Druckbegrenzungsventil erzeugte Wärme über den in der Getriebeölwanne platzierten Wärmetauscher an das Getriebeöl abgegeben. Auf diese Weise wird mittels der Hydraulikflüssigkeit das Getriebeöl erwärmt. Dies wird im Folgenden mitunter auch als hydraulische Getriebeölheizung bezeichnet. Dieses Konzept kann in gleicher oder ähnlicher Weise auch auf andere Aggregate einer Bohranlage übertragen werden.

Die Einleitung der erwärmten Hydraulikflüssigkeit in den Wärmetauscher kann temperatur- und/oder zeitabhängig erfolgen. Bei einer temperaturabhängigen Einleitung der erwärmten Hydraulikflüssigkeit in den Wärmetauscher kann diese Einleitung erfolgen, wenn die Hydraulikflüssigkeit eine vorgegebene Temperatur erreicht hat. Bei einer zeitabhängigen Einleitung der erwärmten Hydraulikflüssigkeit in den Wärmetauscher kann diese Einleitung erfolgen, wenn die Umwälzung der Hydraulikflüssigkeit über das Druckbegrenzungsventil zumindest für eine vorgegebene oder vorgebbare Dauer erfolgt ist und dementsprechend davon ausgegangen werden kann, dass die Hydraulikflüssigkeit eine zum Aufwärmen des Getriebeöls notwendige Temperaturerhöhung erfahren hat.

In Bezug auf ein Verfahren zum Betrieb eines solchen oder im Folgenden mit weiteren Details beschriebenen Topdrives ist vorgesehen, dass in Abhängigkeit von dem Getriebeöltemperaturmesswert das Hydraulikaggregat automatisch zum Umwälzen der Hydraulikflüssigkeit über das Druckbegrenzungsventil angesteuert wird und dass die Hydraulikflüssigkeit temperatur- und/oder zeitabhängig automatisch durch einen in der Getriebeölwanne platzierten Wärmetauscher geleitet wird.

Die oben genannte Aufgabe wird auch mittels einer Steuerungseinrichtung zur Steuerung des die Kaltstartprozedur realisierenden Betriebsverfahrens des Topdrives gelöst, die nach dem Verfahren wie hier und im Folgenden beschrieben arbeitet und dazu Mittel zur Durchführung des Verfahrens umfasst. Die Erfindung ist dabei bevorzugt in Software implementiert, aber zum Beispiel genauso auch in Hardware oder in Soft- und Hardware implementierbar. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinrichtung, in deren Speicher als Mittel zur Durchführung des Verfahrens und seiner Ausgestaltungen ein solches Computerprogramm geladen oder ladbar ist.

Wenn hier und im Folgenden darauf hingewiesen wird, dass eine bestimmte Aktion automatisch erfolgt, ist dies insbesondere so zu verstehen, dass die Aktion durch die oder zumindest unter Kontrolle der Steuerungseinrichtung durchgeführt oder ausgelöst wird. Beispiele für solche Aktionen sind der Vergleich des Getriebeöltemperaturmesswerts mit dem Grenzwert für die Getriebeöltemperatur und die in Abhängigkeit vom Getriebeöltemperaturmesswert erfolgende Ansteuerung des Hydraulikaggregats zum Umwälzen der Hydraulikflüssigkeit über das Druckbegrenzungsventil.

Der Vorteil der Erfindung besteht zum einen darin, dass zur Erwärmung des Getriebeöls Komponenten und Aggregate verwendet werden, die von dem Topdrive ohnehin bereits umfasst sind, nämlich das Hydraulikaggregat und das Druckbegrenzungsventil. Zum anderen ist vorteilhaft, dass die hier vorgeschlagene Erwärmung des Getriebeöls lediglich den Betrieb des Hydraulikaggregats erfordert. Das Hydraulikaggregat lässt sich ohne Weiteres mittels eines Notstromaggregats betreiben. Die hier vorgeschlagene Erwärmung des Getriebeöls ist damit unabhängig von einer mitunter nicht oder nicht mit einer ausreichenden Stabilität zur Verfügung stehenden Netzspannung. Weil zur Erwärmung des Getriebeöls Komponenten und Aggregate verwendet werden, die von dem Topdrive ohnehin bereits umfasst sind, wird kein zusätzlicher Bauraum im Bereich des Topdrives beansprucht. Der (zusätzlich erforderliche) Wärmetauscher befindet sich innerhalb des Volumens der Getriebeölwanne, deren Geometrie und Außenmaße dafür keine Änderung erfordern, so dass auch der in der Getriebeölwanne befindliche Wärmetauscher keinen zusätzlichen Bauraum beansprucht.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Bei einer Ausführungsform der Antriebsvorrichtung (des Topdrives) umfasst diese (bzw. dieser) einen zur Unterscheidung als Hydraulikflüssigkeitstemperatursensor bezeichneten Temperatursensor. Mittels dieses Hydraulikflüssigkeitstemperatursensors ist ein Hydraulikflüssigkeitstemperaturmesswert für eine Temperatur der Hydraulikflüssigkeit in der Wanne des Hydraulikaggregats messbar. In Abhängigkeit von diesem Hydraulikflüssigkeitstemperaturmesswert ist dann mittels des Hydraulikaggregats die Hydraulikflüssigkeit durch den in der Getriebeölwanne platzierten Wärmetauscher leitbar.

Auf Basis des von dem Hydraulikflüssigkeitstemperatursensor erhältlichen Hydraulikflüssigkeitstemperaturmesswerts ist damit eine automatische und temperaturabhängige Einleitung der Hydraulikflüssigkeit in den Wärmetauscher möglich. Für die Einleitung der Hydraulikflüssigkeit in den Wärmetauscher wird in Bezug auf den Hydraulikflüssigkeitstemperaturmesswert das Erreichen eines vorgegebenen oder vorgebbaren Schwellwertes überwacht. Sobald dieser Schwellwert erreicht ist, ist eine ausreichende Erwärmung der Hydraulikflüssigkeit erkannt. Die erwärmte Hydraulikflüssigkeit kann jetzt zum Wärmetauscher geleitet werden, so dass dort eine Wärmeabgabe an das den Wärmetauscher umgebende Getriebeöl stattfindet.

Bei einer zusätzlichen oder alternativen Ausführungsform der Antriebsvorrichtung (des Topdrives) ist in Strömungsrichtung der Hydraulikflüssigkeit zwischen dem Hydraulikaggregat und dem Wärmetauscher ein Wegeventil angeordnet. Mittels des Wegeventils lässt sich der Hydraulikflüssigkeitsstrom automatisch entweder zum Druckbegrenzungsventil oder zum Wärmetauscher leiten. Je nach Ort des Wegeventils (stromaufwärts des Druckbegrenzungsventils oder stromabwärts des Druckbegrenzungsventils) ist eine Umlenkung oder Aufteilung des Hydraulikflüssigkeitsstroms möglich.

Wenn sich das Wegeventil stromaufwärts des Druckbegrenzungsventils befindet, lässt sich mittels des Wegeventils der Hydraulikflüssigkeitsstrom entweder ausschließlich über das Druckbegrenzungsventil oder ausschließlich durch den Wärmetauscher leiten. An das Wegeventil schließt sich ein erster hydraulischer Zweig mit dem Druckbegrenzungsventil und ein zweiter hydraulischer Zweig mit dem Wärmetauscher an. Je nach Stellung des Wegeventils ist entweder der erste hydraulische Zweig oder der zweite hydraulische Zweig aktiv.

Wenn sich das Wegeventil stromabwärts des Druckbegrenzungsventils befindet, ist bei gesperrtem Wegeventil nur der hydraulische Zweig über das Druckbegrenzungsventil aktiv. Wenn das Wegeventil geöffnet ist, bleibt der hydraulische Zweig über das Druckbegrenzungsventil davon unbeeinflusst und weiterhin aktiv. Der Hydraulikflüssigkeitsstrom teilt sich aber auf und folgt zum Teil dem ersten hydraulischen Zweig über das Druckbegrenzungsventil und zum Teil dem zweiten hydraulischen Zweig mit dem geöffneten Wegeventil und dem im Anschluss daran befindlichen Wärmetauscher.

Ein solches Wegeventil ist also eine effiziente und gleichzeitig einfache Möglichkeit, um einen ersten hydraulischen Kreis zu implementieren, in welchem mittels des dortigen Druckbegrenzungsventils eine Verlustleistung generiert wird und damit eine Erwärmung der Hydraulikflüssigkeit erfolgt, und gleichzeitig einen zweiten hydraulischen Kreis zu implementieren, in welchem eine ausreichend erwärmte Hydraulikflüssigkeit zu einem Wärmetauscher in der Getriebeölwanne zur dortigen Erwärmung des Getriebeöls geleitet werden kann.

Bei einer besonderen Ausführungsform der Antriebsvorrichtung (des Topdrives), insbesondere bei einer solchen Ausführungsform, die aufgrund des Orts des Wegeventils eine Aufteilung des vom Hydraulikaggregat erzeugten Volumenstroms erlaubt, ist in Strömungsrichtung der Hydraulikflüssigkeit zwischen dem Hydraulikaggregat und dem Wärmetauscher ein Stromregelventil (Drossel) angeordnet. Mittels des Stromregelventils lässt der vom Hydraulikaggregat bereitgestellte Volumenstrom zum Wärmetauscher einstellen. Je weiter das Stromregelventil geöffnet ist, je weniger Widerstand sich damit für die das Stromregelventil durchströmende Hydraulikflüssigkeit ergibt, umso mehr Hydraulikflüssigkeit strömt über den Weg mit dem Stromregelventil. Umgekehrt strömt umsoweniger Hydraulikflüssigkeit über den Weg mit dem Stromregelventil, je weiter das Stromregelventil geschlossen ist. Aufgrund der Aufteilung des Volumenstroms strömt dann mehr Hydraulikflüssigkeit über den Weg mit dem von Hydraulikaggregat umfassten Druckbegrenzungsventil. Mit dem Stromregelventil lässt sich folglich einstellen, in welchem Umfang durch weitere Umwälzung der Hydraulikflüssigkeit weiter Wärme erzeugt werden soll und in welchem Umfang durch Einleitung der Hydraulikflüssigkeit in den Wärmetauscher eine Erwärmung des Getriebeöls erfolgen soll.

Darüber hinaus hat sich herausgestellt, dass beim Durchströmen des Stromregelventils - genauso wie oben für das Druckbegrenzungsventil beschrieben - eine Verlustleistung generiert wird und damit eine Erwärmung der durch das Stromregelventil strömenden Hydraulikflüssigkeit resultiert. Die so erzeugte Wärme wird ebenfalls zum Wärmetauscher geleitet und ist dort ebenfalls zur Erwärmung des Getriebeöls wirksam.

Optional kann in Strömungsrichtung der Hydraulikflüssigkeit zwischen dem Hydraulikaggregat und dem Wärmetauscher ein weiteres Druckbegrenzungsventil vorgesehen sein. Dieses bewirkt eine solche Begrenzung des wirkenden Drucks der Hydraulikflüssigkeit, dass diese gefahrlos zum Wärmetauscher geleitet werden kann.

Als eine besonders geeignete Form des Wärmetauschers hat sich ein sogenanntes Rippenrohr herausgestellt, weil dieses bekanntlich im Vergleich zu einem in Form einer Wendel aufgerollten und von der Hydraulikflüssigkeit durchströmten Rohr eine nochmals deutlich erhöhte Oberfläche aufweist und damit eine besonders gute Wärmeübertragung an das den Wärmetauscher/das Rippenrohr umgebende Getriebeöl gewährleistet.

Bei einer Ausführungsform des eingangs genannten Verfahrens zum Betrieb der Antriebsvorrichtung/des Topdrives ist bei einer solchen Antriebsvorrichtung, die einen Getriebeöltemperatursensor zur Erfassung einer Getriebeöltemperatur des Getriebeöls in der Getriebeölwanne umfasst, vorgesehen, dass bei einem Getriebeöltemperaturmesswert unter einem vorgegebenen oder vorgebbaren Temperaturgrenzwert (zum Beispiel minus 20 °C) das Hydraulikaggregat automatisch zum Umwälzen der Hydraulikflüssigkeit über das Druckbegrenzungsventil angesteuert wird. Das Umwälzen der Hydraulikflüssigkeit und damit die Erwärmung der Hydraulikflüssigkeit erfolgt bei einer solchen Überwachung des Getriebeöltemperaturmesswerts zum einen automatisch, aber zum anderen nur bedarfsweise. Wenn der als Maß für die Getriebeöltemperatur erfasste Getriebeöltemperaturmesswert unter dem Temperaturgrenzwert liegt, ist eine Situation erkannt, die vor Inbetriebnahme des Topdrives eine Kaltstartprozedur erfordert. Das Erkennen des Erfordernisses einer solchen Kaltstartprozedur und das Einleiten einer solchen Kaltstartprozedur durch Umwälzen der Hydraulikflüssigkeit über das Druckbegrenzungsventil kann automatisch erfolgen, indem mittels einer dafür vorgesehenen Schaltung oder Software eine entsprechende Verarbeitung und logische Verknüpfung des Getriebeöltemperaturmesswerts und des Temperaturgrenzwerts erfolgt. Damit ist eine automatische Umwälzung der Hydraulikflüssigkeit über das Druckbegrenzungsventil in Abhängigkeit von dem Getriebeöltemperaturmesswert realisiert.

Bei einer Ausführungsform des eingangs genannten Verfahrens zum Betrieb der Antriebsvorrichtung/des Topdrives oder seiner Ausgestaltungen ist bei einer solchen Antriebsvorrichtung, die zusätzlich einen Hydraulikflüssigkeitstemperatursensor zur Erfassung eines Hydraulikflüssigkeitstemperaturmesswerts für eine Temperatur der Hydraulikflüssigkeit in der Wanne des Hydraulikaggregats umfasst, vorgesehen, dass bei einem Hydraulikflüssigkeitstemperaturmesswert über einem vorgegebenen oder vorgebbaren Temperaturschwellwert die Hydraulikflüssigkeit automatisch durch den in der Getriebeölwanne platzierten Wärmetauscher geleitet wird. Die Erfassung der Temperatur der Hydraulikflüssigkeit in Form eines Hydraulikflüssigkeitstemperaturmesswerts und dessen Vergleich mit einem Temperaturschwellwert ist eine effiziente und einfache Möglichkeit zur Realisierung einer automatischen und temperaturabhängigen Einleitung der Hydraulikflüssigkeit in den in der Getriebeölwanne platzierten Wärmetauscher. Als Temperaturschwellwert kommt zum Beispiel eine Temperatur von +40 °C in Betracht. Wenn der Hydraulikflüssigkeitstemperaturmesswert diese Temperatur oder den jeweiligen Temperaturschwellwert erreicht, ist eine ausreichende Erwärmung der Hydraulikflüssigkeit erkannt. Die von der Hydraulikflüssigkeit aufgenommene Wärmeenergie kann an das Getriebeöl zu dessen Erwärmung abgegeben werden. Dafür wird der Hydraulikflüssigkeitsstrom zum Wärmetauscher oder zumindest auch zum Wärmetauscher geleitet und zu diesem Zweck ein Weg für die Hydraulikflüssigkeit vom Hydraulikaggregat zum Wärmetauscher freigegeben.

Bei einer weiteren Ausführungsform des eingangs genannten Verfahrens zum Betrieb der Antriebsvorrichtung/des Topdrives oder seiner Ausgestaltungen ist bei einer solchen Antriebsvorrichtung, die ein stromaufwärts des Druckbegrenzungsventils zwischen dem Hydraulikaggregat und dem Wärmetauscher angeordnetes Wegeventil umfasst, vorgesehen, dass durch eine automatische Ansteuerung des Wegeventils der Hydraulikflüssigkeitsstrom zwischen einem ersten Weg über das Druckbegrenzungsventil einerseits und einem zweiten Weg über den Wärmetauscher andererseits umgeschaltet wird. Das Wegeventil und dessen geeignete Ansteuerung ist also eine einfache und effiziente Möglichkeit, um einen Weg für die Hydraulikflüssigkeit vom Hydraulikaggregat zum Wärmetauscher freizugeben. Das Wegeventil leitet den Hydraulikflüssigkeitsstrom exklusiv entweder über das Druckbegrenzungsventil (zur Erwärmung der Hydraulikflüssigkeit) oder zum Wärmetauscher (zur Wärmeabgabe an das Getriebeöl).

Bei einer alternativen Ausführungsform des eingangs genannten Verfahrens zum Betrieb der Antriebsvorrichtung/des Topdrives oder seiner Ausgestaltungen ist bei einer solchen Antriebsvorrichtung, die im Gegensatz zur oben beschriebenen Ausführungsform nicht stromaufwärts des Druckbegrenzungsventils, sondern stromabwärts des Druckbegrenzungsventils zwischen dem Hydraulikaggregat und dem Wärmetauscher ein Wegeventil umfasst, vorgesehen, dass durch eine automatische Ansteuerung des Wegeventils der Hydraulikflüssigkeitsstrom zwischen einem ersten Weg über das Druckbegrenzungsventil und einem zweiten Weg, der zumindest auch den Wärmetauscher umfasst, umgeschaltet wird. Das Wegeventil und dessen geeignete Ansteuerung ist also auch bei dieser Ausführungsform eine einfache und effiziente Möglichkeit, um einen Weg für die Hydraulikflüssigkeit vom Hydraulikaggregat zum Wärmetauscher freizugeben. Abweichend zu der zuvor beschriebenen Ausführungsform ist bei einer Anordnung des Wegeventils stromabwärts des Druckbegrenzungsventils für die Hydraulikflüssigkeit der erste Weg über das Druckbegrenzungsventil immer offen. Bei einer Ansteuerung des Wegeventils zur Freigabe eines Weges für die Hydraulikflüssigkeit (auch) über den Wärmetauscher kommt es dementsprechend zu einer Aufteilung des Hydraulikflüssigkeitsstroms auf den ersten Weg (über das Druckbegrenzungsventil) und auf den zweiten Weg (durch den Wärmetauscher). Der Vorteil besteht hier darin, dass die über den ersten Weg strömende Hydraulikflüssigkeit weiterhin wie bei der ausschließlichen Umwälzung über das Druckbegrenzungsventil erwärmt wird, so dass die so von der Hydraulikflüssigkeit weiterhin aufgenommene Wärme kontinuierlich für eine Abgabe an das Getriebeöl zu Verfügung steht.

Der Vorteil der Erfindung und ihrer Ausgestaltungen besteht gerade auch darin, dass damit gerechnet werden kann, dass sich durch die Erwärmung der Hydraulikflüssigkeit durch deren Umwälzung über das Druckbegrenzungsventil eine übertragbare Wärmeleistung von 2kW bis 3kW ergibt. Damit lässt sich das Getriebeöl eines von der Anmelderin unter der Bezeichnung TD-500-HT angebotenen Topdrives innerhalb etwa einer Stunde von -40 °C auf ca. -15 °C erwärmen. Ein solches Aufwärmen des Getriebeöls im Rahmen einer Kaltstartprozedur- oder ein Warmhalten des Getriebeöls - ist nur mittels der ohne Weiteres auch von einer Notstromversorgung speisbaren Nebenantriebe, nämlich hier des Hydraulikaggregats, möglich. Das Aufwärmen oder Warmhalten des Getriebeöls wird dabei mittels einer "hydraulischen Getriebeölheizung" gewährleistet, die im Wesentlichen ohne zusätzliche Funktionseinheiten auf Seiten des Topdrives auskommt, weil speziell das Hydraulikaggregat und das Druckbegrenzungsventil, über das die Hydraulikflüssigkeit zum Erwärmen umgewälzt wird, von dem Topdrive ohnehin umfasst sind. Anstelle eines Temperatursensors (Getriebeöltemperatursensor, Hydraulikflüssigkeitstemperatursensor) kommt ein sonstiges Mittel zur Ermittlung/Erfassung/Berechnung/Schätzung eines Temperaturwerts in Betracht, zum Beispiel ein mathematisches Modell, mittels dessen sich der jeweilige Temperaturwerts auf Basis anderer, insbesondere am Topdrive aufgenommener Größen ermitteln, berechnen und/oder schätzen lässt, zum Beispiel auf Basis einer Umgebungstemperatur und einer Betriebsdauer. An die Stelle des Getriebeöltemperatursensors und/oder Hydraulikflüssigkeitstemperatursensors tritt dann ein entsprechendes Mittel zur Ermittlung/Erfassung/Berechnung/Schätzung - zusammenfassend aber ohne Verzicht auf eine weitergehende Allgemeingültigkeit als Ermittlung bezeichnet - der Getriebeöltemperatur bzw. der Hydraulikflüssigkeitstemperatur.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen, allerdings sind nicht alle Bezugszeichen in allen Figuren eingezeichnet, um die Übersicht nicht unnötig zu erschweren.

Es zeigen
- Fig. 1: einen Teil einer Bohranlage mit einem Mast und einem darin beweglichen sogenannten Topdrive an sich bekannter Art, wie sie zur Verwendung einer Vorrichtung zur Handhabung von Gestängeelementen in Betracht kommt,
- Fig. 2: eine Darstellung eines Topdrives mit weiteren Details, nämlich speziell einem Hydraulikaggregat und einem Getriebegehäuse,
- Fig. 3: einen Hydraulikplan mit einem ersten und einem zweiten hydraulischen Kreis für vom Hydraulikaggregat geförderte Hydraulikflüssigkeit,
- Fig. 4: eine vergrößerte Darstellung des Getriebegehäuses des Topdrives aus Fig. 2 mit einem dort platzierten und zur Wärmeabgabe an im Getriebegehäuse befindliches Getriebeöl vorgesehenen Wärmetauscher, der seinerseits von mit dem Hydraulikaggregat erwärmter Hydraulikflüssigkeit durchströmt wird, sowie
- Fig. 5: den Hydraulikplan gemäß Fig. 3 zusammen mit einer zum Erhalt von Messwerten von und zum Abgeben von Steuersignalen an einzelne von dem Hydraulikplan umfasste Aggregate vorgesehenen und bestimmten Steuerungseinrichtung.

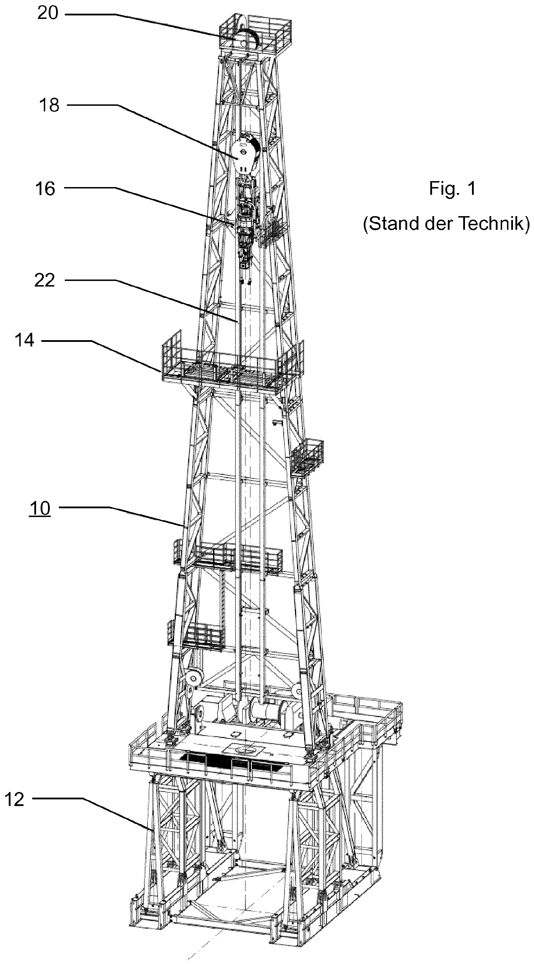

Die Darstellung in Fig. 1 zeigt als Teil einer Bohranlage einen Mast 10 mit einer möglichen Ausführungsform eines zugehörigen Unterbaus 12. Am Mast 10 befindet sich hier eine sogenannte Fingerbühne 14, die in an sich bekannter Art zum aufrechten, also vertikalen Lagern von Bohrgestängeelementen vorgesehen ist. Im Mast 10 ist in an sich bekannter Art und Weise ein sogenannter Topdrive 16 angebracht, der im Betrieb der Bohranlage zum Absenken oder Anheben des Bohrgestänges (nicht dargestellt; nur gestrichelt angedeutet) und zum Drehen des Bohrgestänges zum Bewirken des Bohrvorgangs vorgesehen ist. Der Topdrive 16 ist demgemäß eine Antriebsvorrichtung zum Antrieb von Bohrgestänge beim Niederbringen von Bohrungen auf Kohlenwasserstoff-Lagerstätten oder zur Nutzung von Geothermie. Der Begriff Topdrive ist in der Fachterminologie zur Bezeichnung einer solchen Antriebsvorrichtung üblich. Demensprechend wird der Begriff hier und im Folgenden benutzt. Dabei wird der Begriff Topdrive speziell auch als Kurzform der ansonsten möglichen Bezeichnung einer solchen Antriebsvorrichtung als Antriebsvorrichtung zum Antrieb von Bohrgestänge beim Niederbringen von Bohrungen auf Kohlenwasserstoff-Lagerstätten oder zur Nutzung von Geothermie verwendet.

Der Topdrive 16 hängt im Mast 10 an einem Rollenblock 18. Der Rollenblock 18 und ein im Bereich einer Mastkrone befindlicher Kronenblock 20 wirken zusammen wie ein Flaschenzug. Vom Kronenblock 20 läuft ein Zugseil (nicht dargestellt) für eine Vertikalbewegung des Topdrives 16 zu einem im Bereich der Bohranlage vorgesehenen Hebewerk. Für eine mittels des Hebewerks auslösbare Vertikalbewegung ist der Topdrive 16 im Mast 10 in Führungsschienen 22 gehalten.

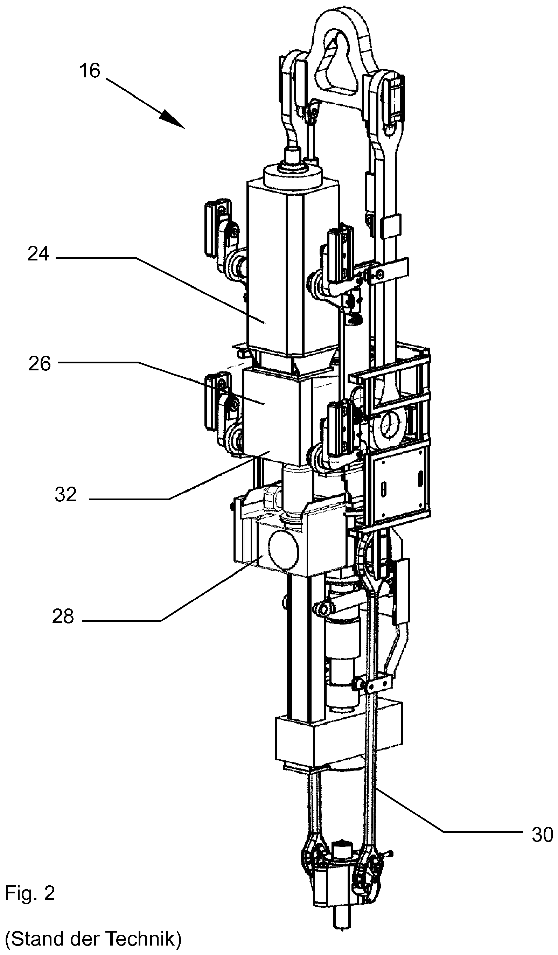

Die Darstellung in Fig. 2 zeigt eine Ausführungsform eines Topdrives 16 mit weiteren Details. Für eine Beschreibung der Einzelheiten des Topdrives kann zum Beispiel auf die DE 10 2009 039 022 A1 verwiesen werden. Die für die weitere Beschreibung wichtigen Details des Topdrives 16 sind eine Antriebseinheit 24 in Form eines Elektromotors (Antriebsmotor), ein Getriebegehäuse 26 mit einem darin befindlichen Getriebe (nicht sichtbar), welches die Drehzahl und das Drehmoment der Antriebseinheit 24 geeignet wandelt, damit das Bohrgestänge beim Bohren passend angetrieben wird, sowie ein Hydraulikaggregat 28, das zum Beispiel den Betriebsdruck zum hydraulischen Bewegen sogenannter Elevatorbügel 30 liefert. In einem unteren Abschnitt des Getriebegehäuses 26 ist in dessen Innerem ein Ölsumpf 32 gebildet. Hier befinden sich Teile des für das Getriebe verwendeten Getriebeöls.

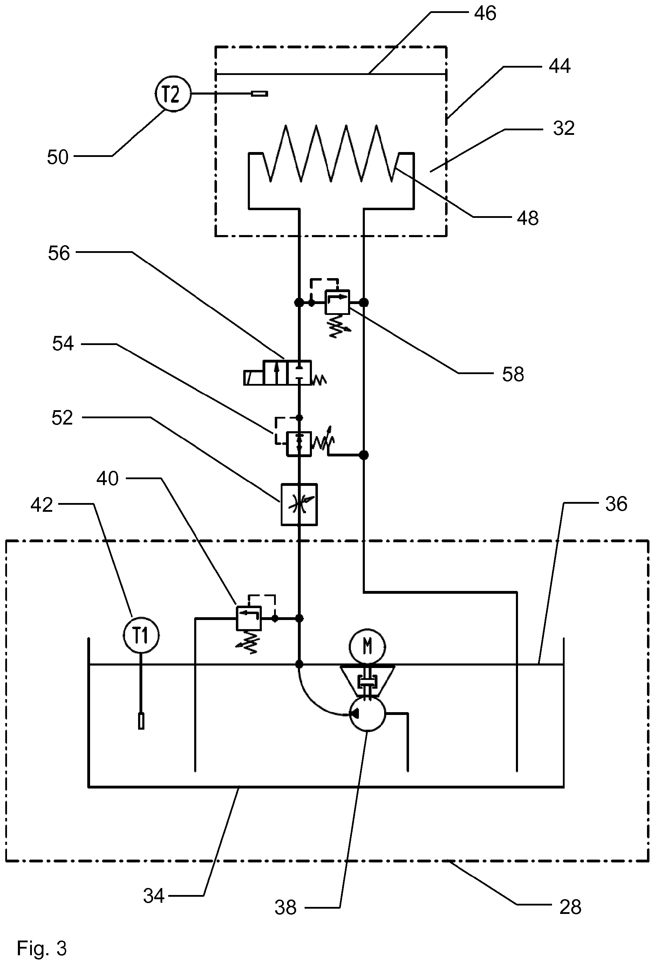

Die Darstellung in Fig. 3 ist eine schematisch vereinfachte Darstellung der oben erwähnten Einzelheiten eines Topdrives 16 (Fig. 2) in Form eines Hydraulikplans. Im unteren Bereich der Darstellung ist das Hydraulikaggregat 28 gezeigt. Zum Hydraulikaggregat 28 gehört eine Wanne 34 für Hydraulikflüssigkeit 36, in der sich bei einem betriebsbereiten oder in Betrieb befindlichen Topdrive 16 Hydraulikflüssigkeit 36 befindet. Zum Hydraulikaggregat 28 gehören des Weiteren eine zum Fördern der Hydraulikflüssigkeit 36 vorgesehene Hydraulikpumpe 38 mit einem Motor für deren Antrieb, ein Druckbegrenzungsventil 40 und ein Temperatursensor 42. Der Temperatursensor 42 erfasst eine Temperatur der Hydraulikflüssigkeit 36 (Hydraulikflüssigkeitstemperatur). Entsprechend wird dieser Temperatursensor 42 auch als Hydraulikflüssigkeitstemperatursensor 42 bezeichnet. Der Hydraulikflüssigkeitstemperatursensor 42 liefert als Hydraulikflüssigkeitstemperatur oder als Maß für die Hydraulikflüssigkeitstemperatur einen Hydraulikflüssigkeitstemperaturmesswert T1.

Wie der Hydraulikplan in Fig. 3 im Bereich des Hydraulikaggregats 28 zeigt, ist mittels des Hydraulikaggregats 28 - speziell mittels der davon umfassten Hydraulikpumpe 38 - die Hydraulikflüssigkeit 36 über das Druckbegrenzungsventil 40 umwälzbar. Die Hydraulikflüssigkeit 36 wird dabei aus der Wanne 34 gefördert und am Auslass des Druckbegrenzungsventils 40 wieder in die Wanne 34 abgegeben. Damit ergibt sich ein Kreislauf der Hydraulikflüssigkeit 36. Dieser Kreislauf wird zur Unterscheidung von einem weiter unten beschriebenen Kreislauf als erster Kreislauf oder kurz als erster Kreis bezeichnet.

Wenn die Hydraulikflüssigkeit 36 im ersten Kreis über das Druckbegrenzungsventil 40 umgewälzt wird, wird mittels der im Druckbegrenzungsventil 40 generierten Verlustleistung eine Erwärmung der Hydraulikflüssigkeit 36 bewirkt (hydraulische Heizung). Das Druckbegrenzungsventil 40 ist Teil des Hydraulikaggregats 28. Das Hydraulikaggregat 28 wiederum ist Teil des Topdrives 16. Damit rechtfertigt sich die Bezeichnung des Druckbegrenzungsventils 40 und des Hydraulikaggregats 28 als Teile des Topdrives 16, also als vom Topdrive 16 umfasst.

Im oberen Bereich der Darstellung in Fig. 3 ist eine im Getriebegehäuse 26 des Topdrives 16 befindliche Getriebeölwanne 44 gezeigt. In der Getriebeölwanne 44 befindet sich beim Betrieb des Topdrives 16 Getriebeöl 46, das - genauso wie die Hydraulikflüssigkeit 36 - nur durch die Oberfläche eines beispielhaften Flüssigkeitsspiegels gezeigt ist. In einem unteren Bereich der Getriebeölwanne 44, also auf der Höhe des Ölsumpfs 32 (Fig. 2), befindet sich ein Wärmetauscher 48. Im Getriebegehäuse 26 befindet sich des Weiteren ein Temperatursensor 50. Dieser Temperatursensor 50 erfasst im Bereich des Ölsumpfs 32 eine Temperatur des Getrieböls (Getriebeöltemperatur). Dementsprechend wird dieser Temperatursensor 50 zur Unterscheidung auch als Getriebeöltemperatursensor 50 bezeichnet. Der Getriebeöltemperatursensor 50 liefert als Getriebeöltemperatur oder als Maß für die Getriebeöltemperatur einen Getriebeöltemperaturmesswert T2.

Der Wärmetauscher 48 gehört zu einem zweiten vom Hydraulikaggregat 28 ausgehenden hydraulischen Kreis, wobei der erste hydraulische Kreis - wie oben beschrieben - innerhalb des Hydraulikaggregats 28 gebildet ist und beim Umwälzen der Hydraulikflüssigkeit 36 über das Druckbegrenzungsventil 40 aktiv ist. Zu dem zweiten hydraulischen Kreis gehören im Anschluss an das Hydraulikaggregat 28 ein Stromregelventil 52, ein Druckregelventil 54, ein Wegeventil 56 und ein zum Schutz des Wärmetauschers 48 vorgesehenes weiteres Druckbegrenzungsventil 58.

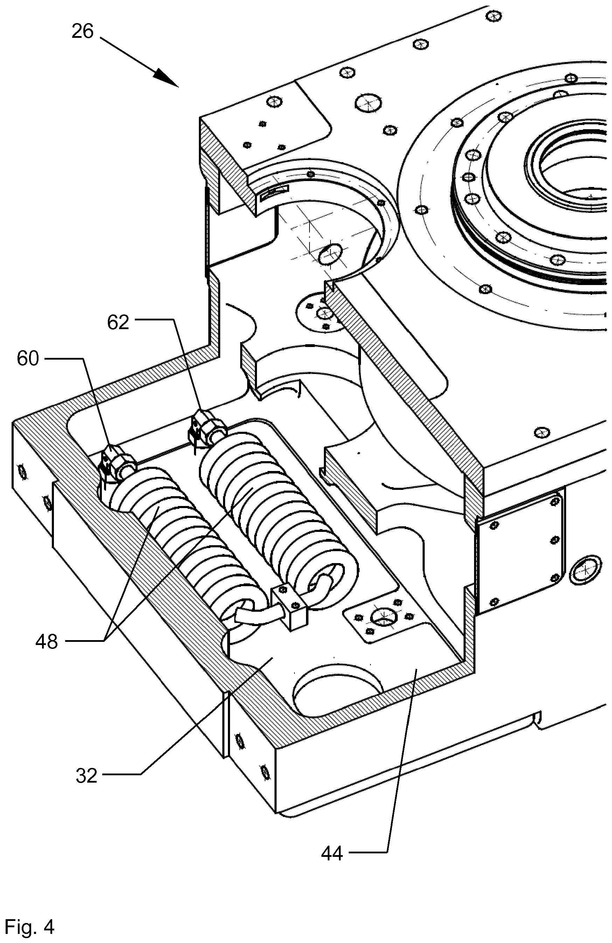

Die Darstellung in Fig. 4 zeigt das teilweise geschnittene Getriebegehäuse 26, so dass der Blick auf dessen Inneres und die dort gebildete Getriebeölwanne 44 mit dem Ölsumpf 32 in einem unteren Bereich der Getriebeölwanne 44 möglich ist. In der Getriebeölwanne 44 ist im Bereich des Ölsumpfs 32 der Wärmetauscher 48 angeordnet, der hier in Form zweier Rohrwendel gezeigt ist. Die beiden Rohrwendel sind miteinander verbunden, so dass der oben erwähnte zweite hydraulische Kreis die beiden Rohrwendel umfasst. Die Rohrwendel oder ein einzelner Rohrwendel oder mehr als die beiden gezeigten Rohrwendel können zur Vergrößerung der wirksamen Oberfläche als sogenannte Rippenrohre ausgeführt sein.

Wenn der zweite hydraulische Kreis aktiv ist, strömt die vom Hydraulikaggregat 28 geförderte Hydraulikflüssigkeit 36 auf einer Vorlaufseite 60 in den Wärmetauscher 48 ein und verlässt den Wärmetauscher 48 und damit das Getriebegehäuse 26 auf einer Rücklaufseite 62.

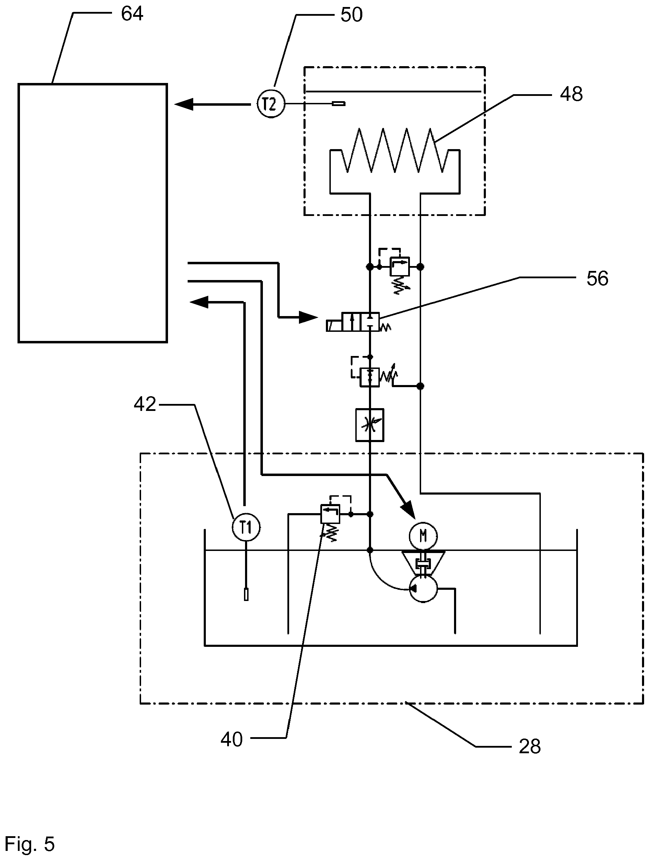

Die Darstellung in Fig. 5 ist eine teilweise Wiederholung der Darstellung in Fig. 3. Um die Übersicht über die Darstellung in Fig. 5 nicht unnötig zu erschweren, sind nicht alle Bezugszeichen wiederholt. Insofern wird auf die Darstellung in Fig. 3 verwiesen. Ansonsten zeigt Fig. 5 eine schematisch vereinfachte Steuerungseinrichtung 64 als Beispiel für Mittel zur Ausführung des hier und im Weiteren beschriebenen Verfahrens. Die Steuerungseinrichtung 64 umfasst zum Beispiel in an sich bekannter Art und Weise eine nicht dargestellte Verarbeitungseinheit in Form von oder nach Art eines Mikroprozessors sowie einen ebenfalls nicht dargestellten Speicher, in den ein Steuerungsprogramm ladbar ist, welches bei einem Betrieb der Steuerungseinrichtung 64 durch deren Verarbeitungseinheit ausgeführt wird.

Die im Steuerungsprogramm implementierte Funktionalität und die damit festgelegte Funktionalität der Steuerungseinrichtung 64, die alternativ auch auf konventionellem Wege, also in Hardware, realisierbar ist, ist kurz gefasst wie folgt:
Die Steuerungseinrichtung 64 erfasst zumindest den vom Getriebeöltemperatursensor 50 gelieferten Getriebeöltemperaturmesswert T2. In Abhängigkeit von dem Getriebeöltemperaturmesswert T2 wird das Hydraulikaggregat 28 zum Umwälzen der Hydraulikflüssigkeit 36 über das Druckbegrenzungsventil 40 angesteuert. Die Getriebeöltemperaturabhängigkeit kann dabei dadurch realisiert sein, dass der Getriebeöltemperaturmesswert T2 mit einem vorgegebenen oder vorgebbaren Temperaturgrenzwert verglichen wird und dass das Hydraulikaggregat 28 zum Umwälzen der Hydraulikflüssigkeit 36 über das Druckbegrenzungsventil 40 angesteuert wird, wenn der Getriebeöltemperaturmesswert T2 unterhalb des Temperaturgrenzwerts liegt. Der Temperaturgrenzwert kann als Inhalt einer Speicherstelle der Steuerungseinrichtung 64 realisiert sein. Der Temperaturgrenzwert ist damit vorgebbar, aber gleichzeitig an die jeweiligen Verhältnisse, also zum Beispiel das Getriebeöl und dessen Viskosität, anpassbar. Als Temperaturgrenzwert kommt zum Beispiel ein Wert von minus 20 °C in Betracht.

Des Weiteren bewirkt die Steuerungseinrichtung 64, dass die Hydraulikflüssigkeit 36 temperatur- und/oder zeitabhängig durch den in der Getriebeölwanne 44 platzierten Wärmetauscher 48 geleitet wird. Dafür wird das Wegeventil 56 angesteuert, das bei der in Fig. 3 und Fig. 5 gezeigten Konfiguration in geöffnetem Zustand den zweiten Kreis und damit den Weg für die Hydraulikflüssigkeit 36 in den Wärmetauscher 48 freigibt, wobei der erste Kreis über das Druckbegrenzungsventil 40 aktiv bleibt. Das Stromregelventil 52 ist dabei zur Aufteilung des Volumenstroms der Hydraulikflüssigkeit 36 auf den ersten und den zweiten Kreis wirksam.

Die bisher beschriebene Messwertaufnahme durch die Steuerungseinrichtung 64 und die durch die Steuerungseinrichtung 64 bewirkte Ansteuerung einzelner Aggregate ist in der Darstellung in Fig. 5 durch Pfeile verdeutlicht. Die so dargestellten Wirkpfade sind in der Praxis in Form von Leitungsverbindungen realisiert, über die Messwerte aufgenommen und Steuersignale abgesetzt werden können.

Wenn die Steuerungseinrichtung 64 eine zeitabhängige Einleitung der Hydraulikflüssigkeit 36 in den Wärmetauscher 48 realisiert, umfasst die Steuerungseinrichtung 64 einen Zeitgeber, der mit dem Beginn des Umwälzens der Hydraulikflüssigkeit 36 über das Druckbegrenzungsventil 40 gestartet wird und der beim Ablauf ein Signal erzeugt, auf dessen Basis die Steuerungseinrichtung 64 das Signal zur Ansteuerung des Wegeventils 56 zum Freigeben des zweiten Kreises für die Hydraulikflüssigkeit 36 generiert. Der Zeitgeber kann in an sich bekannter Art als dekrementierender oder inkrementierender Zähler realisiert sein. Der Start- bzw. Zielwert eines solchen Zählers ist als Inhalt einer Speicherstelle der Steuerungseinrichtung 64 vorgebbar. Der jeweils verwendete Wert ist damit ein an die jeweiligen Verhältnisse anpassbarer Erfahrungswert. Bei einer besonderen Ausführungsform kann vorgesehen sein, dass die Steuerungseinrichtung 64 eine Mehrzahl solcher Werte verwaltet, aus denen von einem Benutzer anhand der verwendeten Hydraulikflüssigkeit 36, der Fördermenge des Hydraulikaggregats 28, also zum Beispiel zwanzig Liter pro Minute, und dem Druck, auf den das Druckbegrenzungsventil 40 den Druck der Hydraulikflüssigkeit 36 begrenzt/reduziert, also zum Beispiel 210 Bar, ein für die jeweils aktuelle Situation passender Wert ausgewählt wird. Die von der Steuerungseinrichtung 64 verwalteten Werte können dann zum Beispiel in einer mehrdimensionalen Matrix organisiert sein und durch Vorgabe oder Auswahl der einzelnen Parameter erfolgt die Auswahl eines passenden Zeitwerts. Auf diese Weise kann erreicht werden, dass eine Messung der Hydraulikflüssigkeitstemperatur nicht erforderlich ist und dementsprechend kann ein zur Messung der Hydraulikflüssigkeitstemperatur ansonsten vorgesehener Hydraulikflüssigkeitstemperatursensor 42 eingespart werden.

Wenn ein Hydraulikflüssigkeitstemperatursensor 42 vorhanden ist und verwendet wird, erfolgt die temperatur- und/oder zeitabhängige Einleitung der Hydraulikflüssigkeit 36 in den Wärmetauscher 48 temperaturabhängig oder zumindest auch temperaturabhängig. Dafür erfasst die Steuerungseinrichtung 64 zumindest während der Umwälzung der Hydraulikflüssigkeit 36 über das Druckbegrenzungsventil 40 den vom Hydraulikflüssigkeitstemperatursensor 42 gelieferten Hydraulikflüssigkeitstemperaturmesswert T1 und vergleicht diesen mit einem vorgegebenen oder vorgebbaren Temperaturschwellwert. Der Temperaturschwellwert ist insbesondere als Inhalt einer Speicherstelle der Steuerungseinrichtung 64 realisiert. Der Temperaturschwellwert ist damit vorgebbar, aber gleichzeitig an die jeweiligen Verhältnisse, also zum Beispiel die Mengenverhältnisse von Hydraulikflüssigkeit 36 und Getriebeöl 46 und/oder ein Maß für die Wärmeübertragung am Wärmetauscher 48 zum Getriebeöl 46, anpassbar. Als Temperaturschwellwert kommt dabei zum Beispiel ein Wert von +40 °C in Betracht. Sobald der Hydraulikflüssigkeitstemperaturmesswert T1 den jeweiligen Temperaturschwellwert erreicht oder überschreitet, wird die dann ausreichend erwärmte Hydraulikflüssigkeit 36 durch den in der Getriebeölwanne 44 platzierten Wärmetauscher 48 geleitet. Dafür steuert die Steuerungseinrichtung 64 - wie oben beschrieben - das Wegeventil 56 an.

Diese Art der hydraulischen Getriebeölheizung bleibt solange aktiv, bis zumindest eine vorgegebene Minimalbetriebstemperatur des Getriebeöls 46 erreicht ist. Dafür überwacht die Steuerungseinrichtung 64 nach der erstmaligen Aktivierung der Umwälzung der Hydraulikflüssigkeit 36 über das Druckbegrenzungsventil 40 kontinuierlich oder in regelmäßigen Abständen den Getriebeöltemperaturmesswert T2. Sobald der Getriebeöltemperaturmesswert T2 die vorgegebene minimal Betriebstemperatur des Getriebeöls 46 erreicht oder überschreitet, kann die hydraulische Getriebeölheizung deaktiviert werden. Die hydraulische Getriebeölheizung wird automatisch unter Kontrolle der Steuerungseinrichtung 64 wieder aktiv, wenn der Getriebeöltemperaturmesswert T2 unter die vorgegebene Minimalbetriebstemperatur des Getriebeöls 46 fällt oder spätestens dann, wenn der Getriebeöltemperaturmesswert T2 unter die Minimaltemperatur fällt.

Die hydraulische Getriebeölheizung, also das Verfahren für den hier beschriebenen Betrieb des Topdrives 16, kann automatisch gestartet werden, indem die Steuerungseinrichtung 64 kontinuierlich den Getriebeöltemperaturmesswert T2 überwacht und bei Unterschreitung der minimalen Betriebstemperatur oder zumindest bei Unterschreitung der Minimaltemperatur die hydraulische Getriebeölheizung aktiviert wird. Die Aktivierung der hydraulischen Getriebeölheizung kann auch erfolgen, indem erst im Zusammenhang mit einer manuellen oder automatischen Aktivierung des Topdrives 16 der Getriebeöltemperaturmesswert T2 in der oben beschriebenen Art ausgewertet und bei Bedarf die hydraulische Getriebeölheizung aktiviert wird. Die Aktivierung des Topdrives 16 wird dann durch die Steuerungseinrichtung 64 solange verzögert oder verhindert, bis aufgrund der hydraulischen Getriebeölheizung für das Getriebeöl 46 zumindest die minimale Betriebstemperatur erreicht ist.

Unabhängig von der bisher beschriebenen hydraulischen Getriebeölheizung kann die Erwärmung des Getriebeöls 46 auch unter Verwendung anderer Wärmequellen erfolgen. Das Getriebeöl 46 und/oder die Hydraulikflüssigkeit 36 kann bzw. können dann als Senke für an anderen Orten erzeugte Wärme dienen. Dafür kann in der Getriebeölwanne 44 und/oder in der Wanne 34 für die Hydraulikflüssigkeit 36 ein umschaltbarer Wärmetauscher oder ein eigener Wärmetauscher (nicht gezeigt) vorgesehen sein, in den zum Beispiel Heißdampf zur Entwärmung einer externen Wärmequelle eingeleitet wird.

Einzelne im Vordergrund stehende Aspekte der hier eingereichten Beschreibung lassen sich damit kurz wie folgt zusammenfassen: Angegeben werden ein sogenannter Topdrive 16 als Vorrichtung zum Antrieb von Bohrgestänge und ein Verfahren zu dessen Betrieb, bei dem Mittel zur Erwärmung des vom Topdrive 16 genutzten Getriebeöls 46 vorgesehen sind, die auch mittels eines Notstromaggregats gespeist werden können und ein Hydraulikaggregat 28 und ein Druckbegrenzungsventil 40 des Topdrives 16 umfassen, wobei zur Erwärmung des Getriebeöls 46 mittels des Hydraulikaggregats 28 Hydraulikflüssigkeit 36 über das Druckbegrenzungsventil 40 umgewälzt wird und die so generierte Wärmeenergie über einen von der Hydraulikflüssigkeit 36 durchströmten Wärmetauscher 48 an das Getriebeöl 46 abgegeben wird.

### Bezugszeichenliste

- 10: Mast (Bohrmast)
- 12: Unterbau
- 14: Fingerbühne
- 16: Topdrive
- 18: Rollenblock
- 20: Kronenblock
- 22: Führungsschiene
- 24: Antriebseinheit (im Topdrive)
- 26: Getriebegehäuse (im Topdrive)
- 28: Hydraulikaggregat (im Topdrive)
- 30: Elevatorbügel (am Topdrive)
- 32: Ölsumpf (im Getriebegehäuse)
- 34: Wanne (für die Hydraulikflüssigkeit)
- 36: Hydraulikflüssigkeit
- 38: Hydraulikpumpe (im Hydraulikaggregat)
- 40: Druckbegrenzungsventil
- 42: Temperatursensor / Hydraulikflüssigkeitstemperatursensor
- 44: Getriebeölwanne
- 46: Getriebeöl
- 48: Wärmetauscher
- 50: Temperatursensor / Getriebeöltemperatursensor
- 52: Stromregelventil
- 54: Druckregelventil
- 56: Wegeventil
- 58: weiteres Druckbegrenzungsventil
- 60: Vorlaufseite (des Wärmetauschers)
- 62: Rücklaufseite (des Wärmetauschers)
- 64: Steuerungseinrichtung
- T1: Hydraulikflüssigkeitstemperaturmesswert
- T2: Getriebeöltemperaturmesswert

## Patentansprüche

1. Antriebsvorrichtung zum Antrieb von Bohrgestänge beim Niederbringen von Bohrungen auf Kohlenwasserstoff-Lagerstätten in Form eines Topdrives (16),
wobei der Topdrive (16) ein Hydraulikaggregat (28) mit einer Wanne (34) für Hydraulikflüssigkeit (36) umfasst, in der sich bei dem betriebsbereiten Topdrive (16) Hydraulikflüssigkeit (36) befindet,
wobei der Topdrive (16) ein Getriebe mit einer Getriebeölwanne (44) umfasst, in der sich bei dem betriebsbereiten Topdrive (16) Getriebeöl (46) befindet,
wobei mittels eines Getriebeöltemperatursensors (50) ein Getriebeöltemperaturmesswert (T2) für eine Temperatur des Getriebeöls (46) in der Getriebeölwanne (44) messbar ist,
wobei mittels des Hydraulikaggregats (28) die Hydraulikflüssigkeit (36) in Abhängigkeit von dem Getriebeöltemperaturmesswert (T2) über ein von dem Topdrive (16) umfasstes Druckbegrenzungsventil (40) umwälzbar ist, so dass eine beim Durchströmen durch das Druckbegrenzungsventil (40) generierte Verlustleistung zur Erwärmung der Hydraulikflüssigkeit (36) führt, und
wobei mittels des Hydraulikaggregats (28) die Hydraulikflüssigkeit (36) in Abhängigkeit von der Temperatur der Hydraulikflüssigkeit und/oder zeitabhängig durch einen in der Getriebeölwanne (44) platzierten Wärmetauscher (48) leitbar ist.

2. Antriebsvorrichtung nach Anspruch 1, wobei mittels eines Hydraulikflüssigkeitstemperatursensors (42) ein Hydraulikflüssigkeitstemperaturmesswert (T1) für eine Temperatur der Hydraulikflüssigkeit (36) in der Wanne (34) des Hydraulikaggregats (28) messbar ist und wobei mittels des Hydraulikaggregats (28) die Hydraulikflüssigkeit (36) in Abhängigkeit von dem Hydraulikflüssigkeitstemperaturmesswert (T1) durch den in der Getriebeölwanne (44) platzierten Wärmetauscher (48) leitbar ist.

3. Antriebsvorrichtung nach Anspruch 1 oder 2, wobei zwischen dem Hydraulikaggregat (28) und dem Wärmetauscher (48) ein Stromregelventil (52) angeordnet ist.

4. Antriebsvorrichtung nach Anspruch 1, 2 oder 3, wobei zwischen dem Hydraulikaggregat (28) und dem Wärmetauscher (48) ein Wegeventil (56) angeordnet ist.

5. Antriebsvorrichtung nach einem der vorangehenden Ansprüche mit einem Wärmetauscher (48) in Form eines Rippenrohrs.

6. Verfahren zum Betrieb einer zum Antrieb von Bohrgestänge beim Niederbringen von Bohrungen auf Kohlenwasserstoff-Lagerstätten bestimmten Antriebsvorrichtung in Form eines Topdrives (16) nach einem der Ansprüche 1 bis 5,
wobei in Abhängigkeit von dem Getriebeöltemperaturmesswert (T2) das Hydraulikaggregat (28) zum Umwälzen der Hydraulikflüssigkeit (36) über das Druckbegrenzungsventil (40) angesteuert wird und
wobei temperatur- und/oder zeitabhängig die Hydraulikflüssigkeit (36) durch den in der Getriebeölwanne (44) platzierten Wärmetauscher (48) geleitet wird.

7. Verfahren nach Anspruch 6, wobei bei einem Getriebeöltemperaturmesswert (T2) unter einem vorgegebenen oder vorgebbaren Temperaturgrenzwert das Hydraulikaggregat (28) zum Umwälzen der Hydraulikflüssigkeit (36) über das Druckbegrenzungsventil (40) angesteuert wird.

8. Verfahren nach Anspruch 6 oder 7 zum Betrieb einer Antriebsvorrichtung nach Anspruch 2 oder nach einem der Ansprüche 3 bis 5, wenn jeder der Ansprüche 3 bis 5 von Anspruch 2 abhängig ist, wobei mittels des Hydraulikflüssigkeitstemperatursensors (42) ein Hydraulikflüssigkeitstemperaturmesswert (T1) für eine Temperatur der Hydraulikflüssigkeit (36) in der Wanne (34) des Hydraulikaggregats (28) erfasst wird und wobei bei einem Hydraulikflüssigkeitstemperaturmesswert (T1) über einem vorgegebenen oder vorgebbaren Temperaturschwellwert die Hydraulikflüssigkeit (36) durch den in der Getriebeölwanne (44) platzierten Wärmetauscher (48) geleitet wird.

9. Verfahren nach Anspruch 6, 7 oder 8 zum Betrieb einer Antriebsvorrichtung nach Anspruch 4 oder nach Anspruch 5, wenn dieser von Anspruch 4 abhängig ist, wobei das zwischen dem Hydraulikaggregat (28) und dem Wärmetauscher (48) angeordnete Wegeventil (56) stromaufwärts des Druckbegrenzungsventils (40) angeordnet ist und wobei durch eine Ansteuerung des Wegeventils (56) der Hydraulikflüssigkeitsstrom zwischen einem ersten Weg über das Druckbegrenzungsventil (40) und einem zweiten Weg über den Wärmetauscher (48) umgeschaltet wird.

10. Verfahren nach Anspruch 6, 7 oder 8 zum Betrieb einer Antriebsvorrichtung nach Anspruch 4 oder nach Anspruch 5, wenn dieser von Anspruch 4 abhängig ist, wobei das zwischen dem Hydraulikaggregat (28) und dem Wärmetauscher (48) angeordnete Wegeventil (56) stromabwärts des Druckbegrenzungsventils (40) angeordnet ist und wobei durch eine Ansteuerung des Wegeventils (56) der Hydraulikflüssigkeitsstrom zwischen einem ersten Weg über das Druckbegrenzungsventil (40) und einem zweiten Weg über das Druckbegrenzungsventil (40) sowie über den Wärmetauscher (48) umgeschaltet wird.

## Claims

1. A drive device for driving a drill pipe for drilling holes into hydrocarbon deposits in the form of a top drive (16),
wherein the top drive (16) comprises a hydraulic unit (28) with a sump (34) for hydraulic fluid (36), hydraulic fluid (36) being located in the sump (34) when the top drive (16) is operative,
wherein the top drive (16) comprises a gear with a gear oil sump (44), wherein when the top drive (16) is operative there is gear oil (46),
wherein by means of a gear oil temperature sensor (50) a gear oil temperature value (T2) for a temperature of the gear oil (46) in the gear oil sump (44) is measurable,
wherein by means of the hydraulic unit (28) the hydraulic fluid (36), depending on the gear oil temperature value (T2), is circulatable via a pressure limiting valve (40) enclosed by the top drive (16), so that the power loss generated by flow through the pressure limiting valve (40) leads to heating of the hydraulic fluid (36), and
wherein by means of the hydraulic unit (28) the hydraulic fluid (36), depending on the temperature of the hydraulic fluid and/or depending on time, is guidable through a heat exchanger (48) placed in the gear oil sump (44).

2. The drive device according to claim 1,
wherein by means of a hydraulic fluid temperature sensor (42) a hydraulic fluid temperature value (T1) for a temperature of the hydraulic fluid (36) is measurable in the sump (34) of the hydraulic unit (28) and wherein by means of the hydraulic unit (28) the hydraulic fluid (36), depending on the hydraulic fluid temperature value (T1), is guidable through the heat exchanger (48) placed in the gear oil sump (44).

3. The drive device according to claim 1 or 2,
wherein a flow control valve (52) is arranged between the hydraulic unit (28) and the heat exchanger (48).

4. The drive device according to claim 1, 2 or 3,
wherein a directional valve (56) is arranged between the hydraulic unit (28) and the heat exchanger (48).

5. The drive device according to one of the preceding claims with a heat exchanger (48) in the form of a rib pipe.

6. A method for operating a drive device for driving a drill pipe for drilling holes into hydrocarbon deposits in the form of a top drive (16) according to one of claims 1 to 5,
wherein, depending on the gear oil temperature value (T2), the hydraulic unit (28) is actuated for circulating the hydraulic fluid (36) via the pressure limiting valve (40) and
wherein, depending on temperature and/or time, the hydraulic fluid (36) is led through the heat exchanger (48) placed in the gear oil sump (44).

7. The method according to claim 6,
wherein at a gear oil temperature value (T2) lower than a set or settable temperature limit value the hydraulic unit (28) is actuated for circulating the hydraulic fluid (36) via the pressure limiting valve (40).

8. The method according to claim 6 or 7 for operating a drive device according to claim 2 or according to one of claims 3 to 5, if each of claims 3 to 5 is dependent upon claim 2,
wherein by means of the hydraulic fluid temperature sensor (42) a hydraulic fluid temperature value (T1) for a temperature of the hydraulic fluid (36) in the sump (34) of the hydraulic unit (28) is acquired and
wherein at a hydraulic fluid temperature value (T1) above a set or settable temperature threshold value the hydraulic fluid (36) is led through the heat exchanger (48) placed in the gear oil sump (44).

9. The method according to claim 6, 7 or 8 for operating a drive device according to claim 4 or according to claim 5, if claim 5 is dependent upon claim 4,
wherein the directional valve (56) arranged between the hydraulic unit (28) and the heat exchanger (48) is arranged upstream of the pressure limiting valve (40) and
wherein through actuation of the directional valve (56) the hydraulic fluid flow is switched between a first way via the pressure limiting valve (40) and a second way via the heat exchanger (48).

10. The method according to claim 6, 7 or 8 for operating the drive device according to claim 4 or according to claim 5, if claim 5 is dependent upon claim 4,
wherein the directional valve (56) arranged between the hydraulic unit (28) and the heat exchanger (48) is arranged downstream of the pressure limiting valve (40) and
wherein through actuation of the directional valve (56) the hydraulic fluid flow is switched between a first way via the pressure limiting valve (40) and a second way via the pressure limiting valve (40) and via the heat exchanger (48).

## Revendications

1. Dispositif d'entraînement destiné à entraîner une tige de forage lors de la réalisation de forages dans des gisements d'hydrocarbures sous la forme d'un topdrive (16),
dans lequel le topdrive (16) comprend un agrégat hydraulique (28) avec une cuve (34) pour fluide hydraulique (36), dans laquelle se trouve du fluide hydraulique (36) avec le topdrive prêt à fonctionner (16),
dans lequel le topdrive (16) comprend une transmission avec un carter d'huile de transmission (44),
dans lequel se trouve de l'huile de transmission (46) avec le topdrive prêt à fonctionner (16),
dans lequel, au moyen d'un capteur de température de l'huile de transmission (50), une valeur de mesure de la température de l'huile de transmission (T2) peut être mesurée pour connaître une température de l'huile de transmission (46) dans le carter de l'huile de transmission (44),
dans lequel, au moyen de l'agrégat hydraulique (28), le fluide hydraulique (36) peut circuler en fonction de la valeur de mesure de la température de l'huile de transmission (T2) à travers une vanne de limitation de pression (40) comprise dans le topdrive (16), de sorte qu'une perte de puissance générée par le passage à travers la vanne de limitation de pression (40) conduit au réchauffement du fluide hydraulique (36), et
dans lequel, au moyen de l'agrégat hydraulique (28), le fluide hydraulique (36) peut être guidé à travers un échangeur de chaleur (48) placé dans le carter d'huile de transmission (44) en fonction de la température du fluide hydraulique et/ou en fonction du temps.

2. Dispositif d'entraînement selon la revendication 1,
dans lequel, au moyen d'un capteur de température du fluide hydraulique (42), une valeur de mesure de la température du fluide hydraulique (T1) peut être mesurée pour connaître une température du fluide hydraulique (36) dans la cuve (34) de l'agrégat hydraulique (28) et
dans lequel, au moyen de l'agrégat hydraulique (28), le fluide hydraulique (36) peut être guidé à travers l'échangeur de chaleur (48) placé dans le carter d'huile de transmission (44) en fonction de la valeur de mesure de la température du fluide hydraulique (T1).

3. Dispositif d'entraînement selon la revendication 1 ou 2,
dans lequel une soupape de réglage de flux (52) est agencée entre l'agrégat hydraulique (28) et l'échangeur de chaleur (48).

4. Dispositif d'entraînement selon la revendication 1, 2 ou 3,
dans lequel une vanne directionnelle (56) est agencée entre l'agrégat hydraulique (28) et l'échangeur de chaleur (48).

5. Dispositif d'entraînement selon l'une des revendications précédentes avec un échangeur de chaleur (48) sous la forme d'un tube à ailettes.

6. Procédé permettant de faire fonctionner un dispositif d'entraînement déterminé pour entraîner une tige de forage lors de la réalisation de forages dans des gisements d'hydrocarbures sous la forme d'un topdrive (16) selon l'une des revendications 1 à 5,
dans lequel l'agrégat hydraulique (28) est commandé par l'intermédiaire de la vanne de limitation de pression (40) pour la circulation du fluide hydraulique (36) en fonction de la valeur de mesure de la température de l'huile de transmission (T2) et
dans lequel le fluide hydraulique (36) est guidé à travers l'échangeur de chaleur (48) placé dans le carter d'huile de transmission (44) en fonction de la température et/ou du temps.

7. Procédé selon la revendication 6,
dans lequel, à une valeur de mesure de la température de l'huile de transmission (T2), l'agrégat hydraulique (28) est commandé par l'intermédiaire de la vanne de limitation de pression (40) pour la circulation du fluide hydraulique (36) au-dessous d'une valeur limite de température prédéterminée ou qui peut être prédéterminée.

8. Procédé selon la revendication 6 ou 7 pour faire fonctionner un dispositif d'entraînement selon la revendication 2 ou selon l'une des revendications 3 à 5, quand chacune des revendications 3 à 5 dépend de la revendication 2,
dans lequel, au moyen du capteur de température du fluide hydraulique (42) une valeur de mesure de la température du fluide hydraulique (T1) est détectée pour connaître une température du fluide hydraulique (36) dans la cuve (34) de l'agrégat hydraulique (28) et
dans lequel, à une valeur de mesure de la température du fluide hydraulique (T1), le fluide hydraulique (36) est guidé à travers l'échangeur de chaleur (48) placé dans le carter d'huile de transmission (44) au-dessus d'une valeur seuil de température prédéterminée ou qui peut être prédéterminée.

9. Procédé selon la revendication 6, 7 ou 8 pour faire fonctionner un dispositif d'entraînement selon la revendication 4 ou selon la revendication 5, quand celle-ci dépend de la revendication 4,
dans lequel la vanne directionnelle (56) agencée entre l'agrégat hydraulique (28) et l'échangeur de chaleur (48) est agencé en amont de la vanne de limitation de pression (40) et
dans lequel le flux de fluide hydraulique est permuté par une commande de la vanne directionnelle (56) entre une première voie par la vanne de limitation de pression (40) et une deuxième voie par l'échangeur de chaleur (48).

10. Procédé selon la revendication 6, 7 ou 8 pour faire fonctionner un dispositif d'entraînement selon la revendication 4 ou selon la revendication 5, quand celle-ci dépend de la revendication 4,
dans lequel la vanne directionnelle (56) agencée entre l'agrégat hydraulique (28) et l'échangeur de chaleur (48) est agencée en aval de la vanne de limitation de pression (40) et
dans lequel le flux de fluide hydraulique est permuté par une commande de la vanne directionnelle (56) entre une première voie par la vanne de limitation de pression (40) et une deuxième voie par la vanne de limitation de pression (40) et par l'échangeur de chaleur (48).
